# EUROPEAN PATENT APPLICATION

(11) **EP 4 704 218 A1**
(43) Date of publication of application: **04.03.2026**
(21) Application number: 23750903.9
(22) Date of filing: 02.06.2023
(51) Int. Cl.: H01M 10/613, B60L 58/26

(54) **BATTERY PACK, TEMPERATURE CONTROL METHOD, BATTERY MANAGEMENT SYSTEM, AND COMPUTER READABLE MEDIUM**

(30) Priority: 28.04.2023 CN 202321027888 U; 28.04.2023 CN 202310487191
(71) Applicant: Eve Energy Co., Ltd., Huizhou, Guangdong 516000 (CN)
(72) Inventor: LIAO, Hulong, Huizhou, Guangdong 516000 (CN); HUANG, Yi, Huizhou, Guangdong 516000 (CN); ZHANG, Guojiang, Huizhou, Guangdong 516000 (CN)
(74) Representative: Patentanwälte Olbricht Buchhold Keulertz
(86) International application number: PCT/CN2023/097921
(87) International publication number: WO 2024/221542

(57) **Abstract**

The present application discloses a battery pack, a temperature control method, a battery management system, and a computer readable medium. The battery pack includes: at least one cell; a battery disconnect unit configured for controlling discharging of the cell and charging of the cell in a fast charging mode; a cooling assembly provided at a side portion of the cell and a side portion of the battery disconnect unit and configured for dissipating heat for the cell and the battery disconnect unit; and a control system electrically connected to the cooling assembly and the cell and configured for turning on the cooling assembly according to a temperature of the cell.

## Description

This application claims priority to Chinese Patent Applications No. 202310487191.8 and 202321027888.9, filed on April 28, 2023. The disclosures of the aforementioned applications are incorporated herein by reference in their entireties.

### TECHNICAL FIELD

The present application relates to the field of battery technologies, and more particularly, to a battery pack, a temperature control method, a battery management system, and a computer readable medium.

### BACKGROUND

Currently, two separate temperature control systems are generally used for temperature control of a Battery Disconnect Unit (BDU) and a battery, respectively. For the battery disconnect unit, when a current of the BDU reaches a preset current threshold or a temperature of the BDU reaches a preset temperature threshold, the temperature control system applied to the BDU can receive a cooling instruction to perform a cooling function. Another separate control strategy is used for a battery cooling system for the battery.

The use of the two separate temperature control systems not only causes a waste of battery capacity but also increases costs. Further, since the two temperature control systems are provided separately to occupy a larger space of the battery pack, a space utilization rate of the battery pack is not optimal.

### SUMMARY

The present application provides a battery pack, a temperature control method, a battery management system, and a computer readable medium, so as to solve the above technical problems.

**In** a first aspect, an embodiment of the present application provides a battery pack, including: at least one cell; a battery disconnect unit electrically connected to the cell and configured for controlling discharging of the cell and charging of the cell in a fast charging mode; a cooling assembly provided at a side portion of the cell and a side portion of the battery disconnect unit and configured for dissipating heat for the cell and the battery disconnect unit; and a control system electrically connected to the cooling assembly and the cell and configured for turning on the cooling assembly according to a temperature of the cell.

In a second aspect, another embodiment of the present application provides a temperature control method for a battery pack, which is applied to the battery pack of the foregoings, where a control system in the battery pack includes a cell temperature control unit and a battery management system configured for executing the temperature control method, and the method includes: determining a charging mode of the cell including a fast charging mode according to a charging current of the battery disconnect unit; and transmitting a first control instruction to the cell temperature control unit when the cell is charged in the fast charging mode, where the first control instruction is configured to control the cell temperature control unit to generate a first control signal for turning on the cooling assembly.

In a third aspect, yet another embodiment of the present application further provides a battery management system, including a processor; and a memory storing thereon instructions executable by the processor to implement the temperature control method for the battery pack of the foregoings.

In a fourth aspect, yet another embodiment of the present application further provides a computer readable medium having stored a computer program thereon which, when executed by a processor, implements the temperature control method for the battery pack of the foregoings.

### BENEFICIAL EFFECTS

The present application can achieve following beneficial effects: by enabling the cooling assembly to dissipate heat for the cell and the battery disconnect unit by turning on the cooling assembly according to the temperature of the cell with the control system, the aspects of the present application can associate the temperature control of the cell with the temperature control of the battery disconnect unit without adopting different cooling strategies for the cell and the battery disconnect unit respectively, thereby reducing the waste of energy, reducing the temperature control cost of the battery, and improving the space utilization rate of the battery pack.

### BRIEF DESCRIPTION OF THE DRAWINGS

FIG. 1 shows a block diagram of a battery pack according to some embodiments of the present application.
FIG. 2 shows a schematic diagram of a battery disconnect unit according to some embodiments of the present application.
FIG. 3 shows a schematic diagram of a graph of a change of a temperature in a cell during charging of the cell according to some embodiments of the present application.
FIG. 4 shows a schematic diagram of a graph of a change of a temperature in a battery disconnect unit during charging of a cell according to some embodiments of the present application.
FIG. 5 shows a first flowchart of a temperature control method of a battery pack according to some embodiments of the present application.
FIG. 6 shows a second flowchart of a temperature control method of a battery pack according to some embodiments of the present application.
FIG. 7 shows a third flowchart of a temperature control method of a battery pack according to some embodiments of the present application.

### DETAILED DESCRIPTION

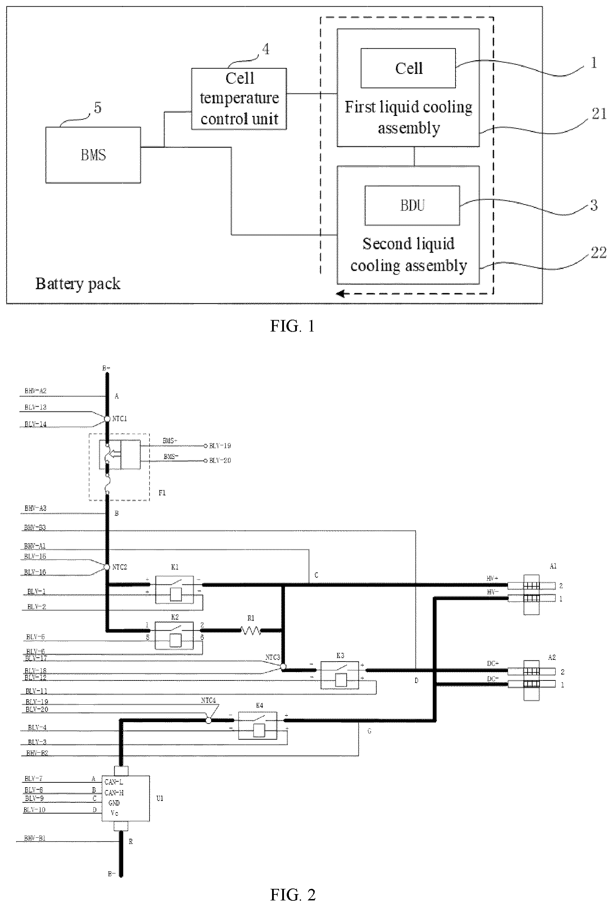

FIG. 1 shows a block diagram of a battery pack according to some embodiments of the present application. As shown in FIG. 1, the battery pack may include at least one cell 1, a Battery Disconnect Unit (BDU) 3, a cooling assembly, and a control system. A plurality of cells 1 may be provided in the battery pack and be disposed to form a plurality of battery modules arranged in rows and/or columns in the battery pack, where the cells 1 in each of the battery modules may be also arranged in rows and/or columns to form a plurality of rows and/or columns of cells.

In an embodiment, the battery disconnect unit can be configured as a relatively separate unit and electrically connected to at least one of the cells. The battery disconnect unit can have various functions, such as controlling a precharge process, a charging process, a discharging process, and the like of the cell. That is, the battery disconnect unit may be configured to control discharging of the cell and charging of the cell in a fast charging mode. In the charging process of the cell, a current flowing through the battery disconnect unit is larger, so that it is prone to result in a too high temperature of some devices in the battery disconnect unit, and there is a risk that the devices may be burned. Therefore, a cooling assembly may be provided at a side portion of the battery disconnect unit to reduce the temperature of the battery disconnect unit.

In an embodiment, the cooling assembly is also provided at a side portion of the cell 1, where the cooling assembly may be a liquid cool assembly. The cooling assembly can be configured to dissipate heat for the cell and the battery disconnect unit, and provided with a cooling medium. When the cooling medium is a cooling liquid, the cooling liquid may be circulated in the cooling assembly.

In an embodiment, the cooling assembly includes: a cooling member in contact with both the cell and the battery disconnect unit; and a driving member connected to the cooling member and configured for driving a cooling medium within the cooling member to flow within the cooling member. The cooling assembly may be configured to dissipate heat for the cell and the battery disconnect unit.

In an embodiment, the cooling assembly may also dissipate heat for a battery module as a base unit. For example, for one of the battery modules, a liquid cooling plate may be provided at a side portion of the battery module, and multiple cells are provided in the battery module, so that a heat dissipation process is simultaneously performed on the cells in the battery module.

In an embodiment, the battery disconnect unit may also be electrically connected to a battery module, where positive electrodes of multiple cells in the battery module may be connected together to form a total positive output of the battery module via a bus, and negative electrodes of the multiple cells in the battery module may also be connected together to form a total negative output of the battery module via a bus. The battery disconnect unit is electrically connected to the total positive output and the total negative output to control charging and discharging of the battery module. It should be understood that specific division of the battery modules may be determined according to actual requirements, and the present application is not limited thereto.

In an embodiment, the cooling assembly includes a first liquid cooling assembly for dissipating heat for the cell, and a second liquid cooling assembly in communication with the first liquid cooling assembly and configured for dissipating heat for the battery disconnect unit. For example, the cooling member may include a first liquid cooling assembly 21 and a second liquid cooling assembly 22 in communication with the first liquid cooling assembly 21, as shown in FIG. 1. In a practical application, both the first liquid cooling assembly 21 and the second liquid cooling assembly 22 may be implemented with liquid cooling pipes. The first liquid cooling assembly 21 may be provided with a water inlet, the second liquid cooling assembly 22 may be provided with a water outlet, and a flow direction of the cooling liquid may be a counterclockwise direction as indicated by an arrow in FIG. 1. The liquid cooling pipe of the first liquid cooling assembly 21 and the liquid cooling pipe of the second liquid cooling assembly 22 may be interconnected so that the purpose of heat exchange is achieved with circulating flow of the cooling liquid.

In an embodiment, the first liquid cooling assembly may be electrically connected to the cell temperature control unit, and the second liquid cooling assembly can be electrically connected to a battery management system directly. As such, the battery management system can obtain a current control signal of the cell temperature control unit, and then control the second liquid cooling assembly corresponding to the battery disconnect unit with the current control signal of the cell temperature control unit, so that the second liquid cooling assembly can be operated under the same control signal as the first liquid cooling assembly, thereby eliminating the need to separately provide an additional control unit for the second liquid cooling assembly of the battery disconnect unit. Compared with the related art in which the two separate temperature control systems are used to respectively control the cell and the battery disconnect unit, the battery pack is simpler and more convenient, reduces a waste of energy, and reduces the temperature control cost of the battery.

The first liquid cooling assembly 21 may include a first cooling member and a first driving member connected to the first cooling member. The second liquid cooling assembly 22 may include a second cooling member and a second driving member connected to the second cooling member. The first driving member and the second driving member may also be combined as one driving member. The liquid cooling pipe of the first liquid cooling assembly 21 and the liquid cooling pipe of the second liquid cooling assembly 22 may be of an integrated structure or may be provided independently of each other. When the liquid cooling pipe of the first liquid cooling assembly 21 and the liquid cooling pipe of the second liquid cooling assembly 22 are provided independently of each other, a valve may be provided between the liquid cooling pipe of the first liquid cooling assembly 21 and the liquid cooling pipe of the second liquid cooling assembly 22 to control the cooling liquid of the first liquid cooling assembly 21 and the cooling liquid of the second liquid cooling assembly 22, respectively. It should be understood that the present application is not limited to particular arrangement of the cooling assembly.

The driving member may be a driving mechanism capable of driving the cooling medium to flow in the cooling member and configured for controlling a cooling parameter such as a flow rate and a flow of the cooling medium. By adjusting the cooling parameter of the cooling medium with the driving member, the temperatures of the cell and the battery disconnect unit in contact with the cooling member can be further controlled. The driving member may be implemented with a valve or the like. It should be understood that the present application is not limited to a specific implementation of the driving member.

Further, the control system may be electrically connected to the cooling assembly and the cell and configured for turning on the cooling assembly according to a temperature of the cell. As shown in FIG. 1, the control system may include a cell temperature control unit 4 and a Battery Management System (BMS) 5 electrically connected to both the battery disconnect unit 3 and the cell temperature control unit 4. The cell temperature control unit 4 may be electrically connected to the driving member so as to transmit a control signal, which may be a first control signal or a second control signal, to the driving member. The battery management system 5 can detect a state of the cell 1 and intelligently manage and maintain the plurality of cells 1.

In an embodiment, there are two charging modes of the cell by means of the battery disconnect unit, i.e., a fast charging mode and a slow charging mode. That is, the battery disconnect unit may be configured to control charging of the cell in the fast charging mode, or may be configured to control charging of the cell in the slow charging mode.

FIG. 2 shows a schematic diagram of a battery disconnect unit according to some embodiments of the present application. Referring to FIG. 2, the battery disconnect unit may include a discharge interface A1, a charging interface A2, and a group of relays including a main positive relay K1, a precharge relay K2, a fast charging relay K3, and a main negative relay K4. For example, a terminal 1 of the discharging interface A1 may receive a negative discharging signal externally, and a terminal 2 of the discharging interface A1 may receive a positive discharge signal externally to discharge the cell. A terminal 1 of the charging interface A2 may receive a negative charging signal externally, and a terminal 2 of the charging interface A2 may receive a positive charging signal externally to charge the cell.

In an embodiment, the battery disconnect unit may further include a fuse F1, which may be connected in series in a loop of the battery disconnect unit to protect the loop. When a current flowing through the fuse F1 is excessively high, a temperature of a metal component in the fuse F1 can reach a melting point of the metal component, thereby cutting off the loop and improving the safety of the battery disconnect unit.

In an embodiment, the battery disconnect unit further includes a current sensor U1 operable to detect a charging current on a charging path to obtain information of the charging current and transmit the obtained information to the battery management system 5 via Controller Area Network (CAN) communication. One terminal of the current sensor U1 is electrically connected to a negative terminal of the main negative relay K4, and the other terminal of the current sensor U1 is electrically connected to a negative electrode of the cell.

In an embodiment, the terminal 1 of the discharging interface A1 is electrically connected to a terminal HV-, which is electrically connected to a terminal DC- and a positive terminal of the main negative relay K4, respectively, and the terminal 2 of the discharging interface A1 is electrically connected to a terminal HV+, which is electrically connected to a negative terminal of the main positive relay K1. A positive terminal of the main positive relay K1 is electrically connected to one terminal of the fuse F1 to form a node NTC2. The other terminal of the fuse F1 is electrically connected to the positive electrode of the cell.

In an embodiment, the battery disconnect unit further includes a precharge resistor R1 connected in series with the precharge relay K2, and a combination of the precharge resistor R1 with the precharge relay K2 is connected in parallel with the main positive relay K1. When the precharge relay K2 is closed, the precharge resistor R1 may be configured to protect against transient shocks generated when the battery pack is energized. One terminal of the precharge relay K2 may be electrically connected to the node NTC2.

In an embodiment, the terminal 1 of the charging interface A2 is electrically connected to the terminal DC-, which is electrically connected to the terminal HV- and the positive terminal of the main negative relay K4, respectively, and the terminal 2 of the charging interface A2 is electrically connected to the terminal DC+, which is electrically connected to a positive terminal of the main positive relay K3. A negative terminal of the fast charging relay K3 is electrically connected to the negative terminal of the main positive relay K1 and one terminal of the precharge resistor R1, respectively, to form a node NTC3.

It should be noted that various devices in the battery disconnect unit may be connected by a copper bar, and there are other signal transmission paths, such as signals BLV-1 to BLV-20, which may be defined and configured as desired and be not limited in the present application.

When the cell is charged in the fast charging mode, all of the main positive relay K1, the fast charging relay K3, and the main negative relay K4 are turned on to form a fast charging loop. When the charging mode is switched from the fast charging mode to the slow charging mode, the fast charging relay K3 may be turned off, both the main positive relay K1 and the main negative relay K4 are turned on, so that the cell is charged with a small current. When the cell is discharged in a discharge mode, both the main positive relay K1 and the main negative relay K4 are turned on to form a discharge loop.

For example, a time period in which the cell may be charged in the fast charging mode may be 10 minutes, during which the cell level may be rapidly increased from an initial level to 80%. In this case, a charging current in a charging loop may reach a magnitude of 400A to 600A, and thus a copper bar, the relays and the fuse in the fast charging loop may generate a large amount of heat so that the temperature of the battery disconnect unit may continue to rise, where the heat may be expressed by an equation Q=I²Rt, where I represents a current of the loop, R represents an internal resistance of the loop, and t represents a charging time period. Therefore, a second liquid cooling assembly 22 may be provided at the periphery of the battery disconnect unit to cool down the battery disconnect unit when the temperature of the battery disconnect unit is too high.

In an embodiment, the control system may be configured for turning on the cooling assembly according to a temperature of the cell. Specifically, when the cell is charged in the fast charging mode by the battery disconnect unit, the driving member can be configured to receive a first control signal of the cell temperature control unit to drive the cooling medium so as to turn on the cooling assembly.

**Table 1 Temperatures of the cell and BDU under various operating conditions**

| Environment temperature °C | Cell temperature °C | Cell operating conditions | Thermal management operations | Cooling liquid temperature °C | BDU operating conditions | BDU initial temperature °C |
|---|---|---|---|---|---|---|
| (-20,-10) | (-20,5) | Limiting power | Heating | 40 | Low power | (-20,-10) |
| | (5,10) | Limiting power | Heating | 40 | Low power | 35 |
| | (10,15) | Allowing high power | Heating | 40 | Normal power | 15-85 |
| | (15,30) | Allowing high power | Circulating | 15 | High power | 30-85 |
| (-10,5) | >30 | Allowing high power | Cooling | 25 | High power | 85 |
| | (-10,5) | Limiting power | Heating | 40 | Low power | (-10,5) |
| | (5,10) | Limiting power | Heating | 40 | Low power | |
| | (10,15) | Maximum 1C | Heating | 40 | Normal power | 85 |
| | (15,30) | Allowing high power | Circulating | 15 | High power | 85 |
| | >30 | Allowing high power | Cooling | 25 | High power charging | 85 |
| (5,20) | (5,10) | Limiting power | Heating | 40 | Low power | |
| | (10,15) | Allowing high power | Heating | 40 | Normal power | 85 |
| | (15,30) | Allowing high power | Circulating | 30 | High power | 85 |
| | >30 | Limiting power | Cooling | 25 | High power charging | 85 |
| (20, 35) | (20,25) | Allowing high power | Circulating | 25 | High power | 25-85 |
| | (25,30) | Allowing high power | Circulating | 30 | High power | 30-85 |
| | (30,35) | Allowing high power | Cooling | 25 | High power | 35-85 |
| | (35,40) | Allowing high power | Cooling | 25 | High power | 40-85 |
| | (35,45) | Maximum 1C | Cooling | 25 | Normal power | 45-85 |
| | (45,50) | Maximum 1C | Cooling | 25 | Normal power | 45-85 |

**It** can be known from the above table 1 that, when the cooling medium is a cooling liquid, the temperature of the cooling liquid does not exceed a first temperature threshold value of 40°C under various operating conditions. The first temperature threshold may be different for different types of cells. The first temperature threshold is less than a heating temperature T of the battery disconnect unit, which may be a thermally balanced temperature and obtained by experiment or thermal simulation. Since the first temperature threshold differs greatly from the heating temperature of the battery disconnect unit, heat transfer can be effectively performed between the cooling assembly and the battery disconnect unit.

In an embodiment, when the cell is charged in the fast charging mode by the battery disconnect unit, the battery disconnect unit operates along with the cell temperature control unit. That is, when the cell is charged in the fast charging mode, the cell temperature control unit may not perform cooling control on the battery disconnect unit. Compared with the related art in which the two separate temperature control units are used to respectively control the temperatures of the cell and the battery disconnect unit, the embodiment of the present application uses the cell temperature control unit to perform cooling control only on the cell in the fast charging mode without performing cooling control on the battery disconnect unit, so that the waste of power can be reduced, temperature control cost of the battery is reduced, and the space utilization rate of the battery pack is improved.

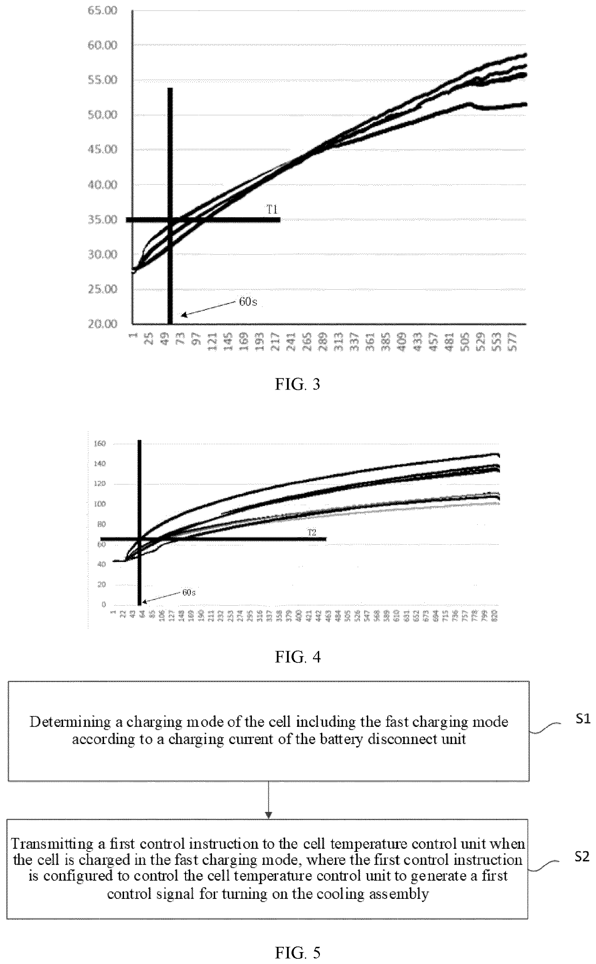

FIG. 3 shows a schematic diagram of a graph of a change of a temperature in a cell during charging according to some embodiments of the present application. As shown in FIG.3, a horizontal axis represents a charging time period in a second (s), and a vertical axis represents a temperature of the cell corresponding to the charging time period. An example in which the fast charging current is 600A can be taken. When the charging time period reaches 60 s, the temperature of the cell is T1 of 35°C. Assuming that the liquid cooling assembly of the cell starts to operate after the temperature of the cell reaches 35°C., the time period from no opening of the liquid cooling assembly to opening of the liquid cooling assembly is 60 seconds.

FIG. 4 shows a schematic diagram of a graph of a change of a temperature in a battery disconnect unit during charging according to some embodiments of the present application. As shown in FIG.4, a horizontal axis represents a charging time period in a second (s), and a vertical axis represents a temperature of the battery disconnect unit corresponding to the charging time period. An example in which the fast charging current is 600A can be taken as well. When the charging time period reaches 60 s, the temperature of the cell is T2 of 66°C under a normal operating condition. In a practical application, devices such as a fuse, relays, a copper bar, and the like inside the battery disconnect unit can operate normally when the temperature of the battery disconnect unit is T2. Even if some of the devices inside the battery disconnect unit cannot operate normally when the temperature of the battery circuit interrupting unit is T2, the devices inside the battery disconnect unit can operate normally by, for example, increasing a current flowing cross-sectional area or a heat dissipation area of the copper bar. Therefore, when the cell is charged in the fast charging mode by the battery disconnect unit, the battery disconnect unit can operate along with the temperature control unit of the cell. The cell temperature control unit can simultaneously control the liquid cooling assembly of the cell and the liquid cooling assembly of the battery disconnect unit with the same control strategy.

When the cell is initially charged, the cell and the battery disconnect unit operate in a cooling-free operating condition, because neither the temperature of the cell nor the temperature of the battery disconnect unit reaches a temperature threshold for opening cooling. As the charging continues, the temperature of the cell and the temperature of the battery disconnect unit can become higher and higher. It can be known from the above Table 1 that, in various operating conditions (such as a low-temperature heating fast charging, a normal-temperature fast charging, and a high-temperature fast charging), since the temperature of the cell rises faster than the temperature of the battery disconnect unit, the temperature of the cell reaches the temperature threshold value for opening cooling over the temperature of the battery disconnect unit. When the temperature of the cell reaches the temperature threshold for opening cooling, the cell temperature control unit may transmit a first control signal to control the liquid cooling assembly of the cell to turn on. Meanwhile, the liquid cooling assembly of the battery disconnect unit may not operate under the action of the first control signal or may directly operate with the same logic as the liquid cooling assembly of the cell. When the cell level reaches 80%, the charging mode of the cell is switched from the fast charging mode to the slow charging mode. In the slow charging mode, the cell temperature control unit may turn off the cooling assembly due to the low charging current. It should be noted that, in the case of switching of the charging mode of the cell from the fast charging mode to the slow charging mode, if the temperature of the cell still exceeds the temperature threshold for starting the cooling when the slow charging mode is enabled, the cell temperature control unit may also turn on the cooling assembly until the temperature of the cell is lower than the temperature threshold for starting the cooling, and the cooling assembly is then turned off.

It should be noted that the various graphs in FIGS. 3 and 4 are obtained under different operating conditions. The conditions may be cell conditions or BDU conditions, such as those listed in Table 1. In the different operating conditions, graphs of change of the temperatures of the cell and the battery disconnect unit during charging may vary with different conditions, but generally do not change much. In a practical application, the graphs of FIGS. 3 and 4 may be plotted based on actual operating conditions.

In an embodiment, referring to FIG. 2, the battery disconnect unit is provided with a temperature detection point NTC2 provided at a connection between the main positive relay K1 and the fuse F1. A temperature signal acquired by the temperature detection point may be transmitted to the battery management system. The battery management system may be configured to obtain temperature data of the temperature detection point, determine whether a failure is present in the cooling assembly according to the temperature data, and adjust the power of the battery pack or cut off a loop current in the battery pack when the failure is present in the cooling assembly. The battery management system may be further configured to control the cell temperature control unit to generate a control signal according to the charging mode of the cell so that the cooling assembly is turned on or off according to the control signal.

It should be noted that a temperature rising speed of the battery disconnect unit is slower than that of the cell. An example in which rating of temperature of the relay is 130°C and rating of temperature of the fuse is 125°C may be taken. Even if the charging current in the battery disconnect unit is larger during the fast charging of the cell, the temperature of the battery disconnect unit is lower when the temperature of the cell reaches the temperature threshold for starting cooling, and the temperatures of the relay and the fuse cannot reach the rating of temperature, so that various devices inside the battery disconnect unit cannot be burned.

In an embodiment, referring to FIG.2, when the cell is discharged in a discharge mode by the battery disconnect unit, both the main positive relay K1 and the main negative relay K4 are turned on to form a discharge loop. In this case, the discharging current is much smaller than the charging current during the fast charging of the cell, so that the cooling assembly may not be turned on. In addition, in order to satisfy the temperature-resistant requirements of various devices of the battery disconnect unit, an appropriate device can be selected in combination with the temperatures of the cell and the battery disconnect unit in various operating conditions shown in the Table 1.

FIG. 5 shows a flowchart of a temperature control method of a battery pact according to some embodiments of the present application. As shown in FIG. 5, another embodiment of the present application provides a temperature control method for a battery pack, which is applied to the battery pack of the foregoings, where a control system in the battery pack includes a cell temperature control unit and a battery management system configured to execute the temperature control method, and the method includes:
Step S1 of determining a charging mode of the cell including the fast charging mode according to a charging current of the battery disconnect unit; and
Step S2 of transmitting a first control instruction to the cell temperature control unit when the cell is charged in the fast charging mode, where the first control instruction is configured to control the cell temperature control unit to generate a first control signal for turning on the cooling assembly.

In an embodiment, the temperature control method of the battery pack may be implemented by a battery management system (BMS), as shown in FIG. 1. In practice, the battery management system may transmit a first control instruction to the cell temperature control unit to control the cell temperature control unit to generate a first control signal to turn on the cooling assembly.

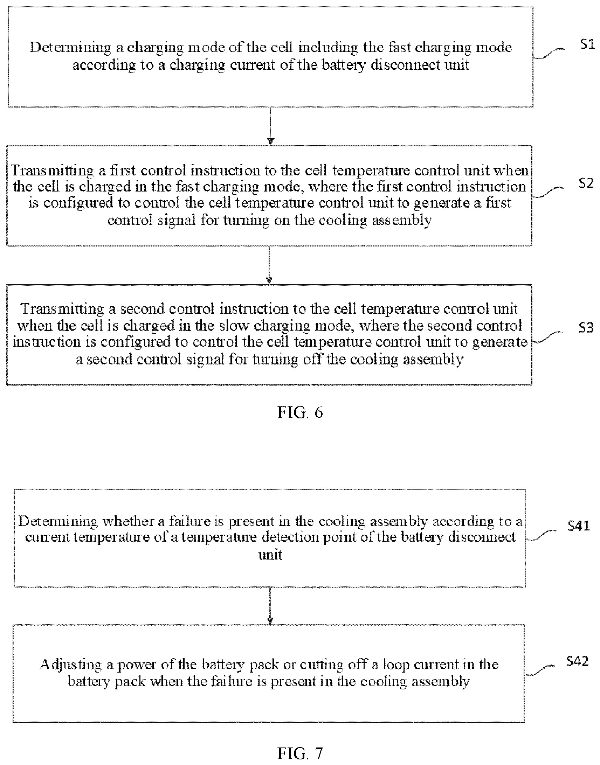

Further, FIG. 6 shows a second flowchart of a temperature control method of a battery pack according to some embodiments of the present application, the charging mode includes a slow charging mode, and the method further includes:
Step S3 of transmitting a second control instruction to the cell temperature control unit when the cell is charged in the slow charging mode, where the second control instruction is configured to control the cell temperature control unit to generate a second control signal for turning off the cooling assembly.

In an embodiment, the liquid cooling assembly of the cell and the liquid cooling assembly of the battery disconnect unit may be separately controlled. For example, the turning on/off of the liquid cooling assembly of the cell can be controlled by the cell temperature control unit, and the turning on/off of the liquid cooling assembly of the battery disconnect unit can be directly controlled by the battery management system.

Further, FIG. 7 shows a third flowchart of a temperature control method of a battery pack according to an embodiment of the present application, and the method further includes:
Step S41 of determining whether a failure is present in the cooling assembly according to a current temperature of a temperature detection point of the battery disconnect unit; and
Step S42 of adjusting a power of the battery pack or cutting off a loop current in the battery pack when the failure is present in the cooling assembly.

The battery disconnect unit can transmit a current temperature of the temperature detection point of the battery disconnect unit to the battery management system, and the battery management system determines whether a failure is present in the cooling assembly according to the current temperature of the temperature detection point of the battery disconnect unit and further adjusts the power of the battery pack or cuts off the loop current in the battery pack when the failure is present in the cooling assembly. It should be understood that details about a preparation method of the cooling liquid can refer to the above description of the liquid-cooled energy storage system and will not be repeatedly described.

In addition, the present application further provides a battery management system, including a processor; and a memory storing thereon instructions executable by the processor to implement any of the temperature control methods.

The present application further provides a computer readable medium having stored a computer program thereon which, when executed by a processor, implements any of the temperature control methods. The computer readable medium may be either non-volatile or volatile

In summary, By enabling the cooling assembly to dissipate heat for the cell and the battery disconnect unit by turning on the cooling assembly according to the temperature of the cell with the control system, embodiments of the present application can associate the temperature control of the cell with the temperature control of the battery disconnect unit without adopting different cooling strategies for the cell and the battery circuit interrupting unit respectively, thereby reducing the waste of energy, reducing the temperature control cost of the battery, and improving the space utilization rate of the battery pack.

In the foregoing embodiments, descriptions of the embodiments are emphasized. A portion that is not described in detail in an embodiment may refer to related descriptions in another embodiment.

## Claims

1. A battery pack, comprising:
at least one cell;
a battery disconnect unit electrically connected to the cell and configured for controlling discharging of the cell and charging of the cell in a fast charging mode;
a cooling assembly provided at a side portion of the cell and a side portion of the battery disconnect unit and configured for dissipating heat for the cell and the battery disconnect unit; and
a control system electrically connected to the cooling assembly and the cell and configured for turning on the cooling assembly based on a temperature of the cell.

2. The battery pack of claim 1, wherein the cooling assembly comprises: a cooling member in contact with both the cell and the battery disconnect unit; and a driving member connected to the cooling member and configured for driving a cooling medium within the cooling member to flow within the cooling member.

3. The battery pack of claim 2, wherein the control system comprises a cell temperature control unit, and the driving member is configured to receive a first control signal of the cell temperature control unit to drive the cooling medium when the cell is charged in the fast charging mode by the battery disconnect unit.

4. The battery pack of claim 3, wherein the control system further comprises a battery management system electrically connected to both the battery disconnect unit and the cell temperature control unit, the battery disconnect unit is provided with a temperature detection point, and the battery management system is configured to obtain temperature data of the temperature detection point and determine whether a failure is present in the cooling assembly based on the temperature data; and the battery management system is further configured to control the cell temperature control unit to generate a control signal based on a charging mode of the cell so that the cooling assembly is turned on or off based on the control signal.

5. The battery pack of claim 4, wherein the cooling assembly comprises a first liquid cooling assembly for dissipating heat for the cell, and a second liquid cooling assembly in communication with the first liquid cooling assembly and configured for dissipating heat for the battery disconnect unit, and the first liquid cooling assembly is electrically connected to the cell temperature control unit and the second liquid cooling assembly is electrically connected to the battery management system.

6. The battery pack of claim 4, wherein the battery disconnect unit comprises a main positive relay and a fuse, and the temperature detection point is provided at a connection between the main positive relay and the fuse.

7. The battery pack of claim 3, wherein the battery disconnect unit is configured to control charging of the cell in a slow charging mode in which the cell temperature control unit is configured to turn off the cooling assembly.

8. A temperature control method for a battery pack, which is applied to the battery pack of any of claims 1-7, wherein the control system in the battery pack comprises a cell temperature control unit and a battery management system configured to execute the temperature control method, and the method comprises:
determining a charging mode of the cell including the fast charging mode based on a charging current of the battery disconnect unit; and
transmitting a first control instruction to the cell temperature control unit based on the cell being charged in the fast charging mode, wherein the first control instruction is configured to control the cell temperature control unit to generate a first control signal for turning on the cooling assembly.

9. The method of claim 8, wherein the charging mode further comprises a slow charging mode, and the method further comprises:
transmitting a second control instruction to the cell temperature control unit based on the cell being charged in the slow charging mode, wherein the second control instruction is configured to control the cell temperature control unit to generate a second control signal for turning off the cooling assembly.

10. The method of claim 8, further comprising:
determining whether a failure is present in the cooling assembly based on a current temperature of a temperature detection point of the battery disconnect unit; and
adjusting a power of the battery pack or cutting off a loop current in the battery pack based on the failure being present in the cooling assembly.

11. A battery management system, comprising: a processor; and a memory storing thereon instructions executable by the processor to implement the temperature control method of any of claims 8-10.

12. A computer readable medium having stored a computer program thereon which, when executed by a processor, implements the temperature control method of any of claims 8-10.
